(19) **Europäisches Patentamt / European Patent Office / Office européen des brevets**

(11) **EP 2 208 651 B1**

(12) **EUROPEAN PATENT SPECIFICATION**

(45) Date of publication and mention
of the grant of the patent:
**15.04.2015 Bulletin 2015/16**

(51) Int Cl.:
***B60T 8/1755*** (2006.01)

(21) Application number: **09000674.3**

(22) Date of filing: **19.01.2009**

(54) **Acceleration vector controlled vehicle cornering stability system**

Beschleunigungsvektorgesteuertes Fahrzeugkurvenfahrtstabilitätssystem

Système de stabilité de virage de véhicule commandé par vecteur d'accélération

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(72) Inventor: **Semsey, Akos, Dr.**
**93049 Ravensburg (DE)**

(43) Date of publication of application:
**21.07.2010 Bulletin 2010/29**

(73) Proprietor: **Continental Automotive GmbH
30165 Hannover (DE)**

(56) References cited:
**EP-A- 0 770 528       EP-A- 0 939 016
WO-A-2004/041614    DE-A1- 19 642 054
DE-A1- 19 643 168**

**Description**

The invention relates to vehicle dynamic control systems, and in particular to an automatic control of a vehicle's cornering stability.

Vehicle dynamic control systems improve the cornering ability of motor vehicles by individually controlling the brakes of a cornering vehicle when the actual direction of the vehicle swerves from its intended direction defined by the current steering angle. Known vehicle dynamic control systems are for instance ESP (Electronic Stability Program also know as Electronic Stability Control), CBC (Cornering Brake Control), or DSC (Dynamic Stability Control). These systems usually apply additional braking force to the outer front wheel to counter an oversteer of a vehicle, while for countering an understeer of a vehicle the braking force on the inner rear wheel is typically increased. Respective controls allow to stabilise the dynamics of a vehicles movement even in situations, where an anti-lock braking systems is activated due to an insufficient road grip.

Current vehicle dynamic control systems use stability improvement functions which estimate the road grip limits of the cornering vehicle. If the road grip is hereby underestimated, the cornering ability of the vehicle is not used to its full extent. However, if the road grip is overestimated, a sideslip of the vehicle will be the result, which may possibly end in an accident. To avoid a respective underestimation or overestimation of the actual road grip or to at least reduce the possibility of its occurrence, the stability improvement functions are typically implemented on grounds of reference models for various driving situations. But reference model based control structures are very complex, because the stability improvement functions have to handle quite a number of different driving situations, including emergency braking with an anti-lock braking system being active.

A vehicle dynamic control according to the preamble of independent claim 1 is known from EP 0 770 528 A2.

It is therefore an object of the present invention to provide a less complex vehicle cornering stability control.

This object is achieved by the invention as defined in the independent claims.

The invention comprises an electronic control circuit (ECC) for a vehicle dynamic control system comprising: a wheel speed sensor signal input, adapted to supply the ECC with sensor signals provided by wheel speed sensors arranged at the wheels of a vehicle having brakes adapted to be controlled by the ECC; a lateral acceleration sensor input, adapted to supply the ECC with sensor signals provided by a lateral acceleration sensor; a yaw rate sensor input, adapted to supply the ECC with sensor signals provided by a yaw rate sensor; a steering wheel angle sensor input adapted to supply the ECC with sensor signals provided by the steering wheel angle sensor; a brake control signal output adapted to individually output a brake control signal to each wheel brake of the vehicle; and a signal processing unit adapted to determine a lateral vehicle acceleration value and a longitudinal vehicle acceleration value based on sensor signals received on one of more of the sensor signal inputs. The signal processing unit is hereby further adapted to generated a brake correction control signal dependent on the ratio of the lateral vehicle acceleration value to the longitudinal vehicle acceleration value, when the ratio takes on a value outside a predetermined range of legitimate values.

The invention achieving the above object further comprises a vehicle dynamic control system having an ECC according to the one explained above; a wheel speed sensor for each front wheel and for each rear wheel of at least one rear axle, whereby each wheel speed sensor is connected to the wheel speed sensor input of the ECC; a steering wheel angle sensor connected to the steering wheel angle sensor input of the ECC; a lateral acceleration sensor connected to the lateral acceleration sensor input of the ECC; and a yaw rate sensor connected to the yaw rate sensor input.

The invention further comprises a vehicle having a respective vehicle dynamic control system.

The invention for achieving the above object further comprises a method for controlling the brakes of a vehicle, which comprises steps for detecting the modification of the brake force applied to at least three wheels of the vehicle by an anti-lock braking system of the vehicle, for determining the lateral vehicle acceleration value and the longitudinal vehicle acceleration value, for determining the absolute value of the ratio of the lateral vehicle acceleration value to the longitudinal vehicle acceleration value, for determining, if the absolute value of the ratio of the lateral vehicle acceleration value to the longitudinal vehicle acceleration value is greater than a predetermined real number, and for generating a brake correction control signal increasing the brake force and/or brake slip applied to the outer front wheel.

Advantageous embodiments of the present invention are the subject of dependent claims.

The lateral vehicle acceleration value is advantageously determined based on a sensor signal provided by a lateral acceleration sensor, with the longitudinal vehicle acceleration value being determined based on measured brake pressure values or brake force values together with wheel-speed values. This enables the application of the invention in vehicles in which no longitudinal vehicle acceleration sensors are provided. However, if the vehicle comprises a longitudinal acceleration sensor, the lateral vehicle acceleration value is conveniently determined based on a sensor signal provided by a lateral acceleration sensor, with the longitudinal vehicle acceleration value being determined based on a sensor signal provided by the longitudinal acceleration sensor. To determine the longitudinal vehicle acceleration value more precisely, the value of the longitudinal vehicle acceleration derived from brake pressure values or brake force values in combination with wheel-speed values may be compared to that derived from the longitudinal acceleration sensor.

To avoid any division by zero error, the ratio of the lateral vehicle acceleration value to the longitudinal vehicle acceleration value is favourably based on a minimum value for the longitudinal vehicle acceleration, in the event that the longitudinal acceleration value is smaller than said minimum value.

The predetermined range of legitimate values is preferably defined by the interval of real numbers between the interval boundaries -n to +n, with n ranging from 0.7 to 1.5, outside of this range, the vehicle either starts to have a high side slip when cornering, or the anti-lock brake system (ABS) situation recognition was improper, resulting in an overestimated vehicle speed.

To improve the cornering ability of the vehicle, the brake correction control signal comprises, when the ratio of the lateral vehicle acceleration value (Ay) to the longitudinal vehicle acceleration value (Ax) is outside of the interval of legitimate values, a component representing an instruction for applying an additional brake force and/or brake slip to the outer front wheel brake.

Further features of the invention will be apparent from the description of embodiments of the invention together with the claims and the attached figures. Embodiments of the invention may implement single features or several features in combination. In the following description, the present invention is explained in more detail with respect to special embodiments and in relation to the enclosed drawings, in which

Figure 1    illustrates an acceleration vector controlled vehicle cornering stability system;

Figure 2    illustrates the illegitimate range for the acceleration vector defining the range in which the system of Figure 1 modifies the braking forces applied to the individual wheels of a vehicle; and

Figure 3    is flowchart indicating the basic steps of a method employed by an acceleration vector controlled vehicle cornering stability system according to Figure 1.

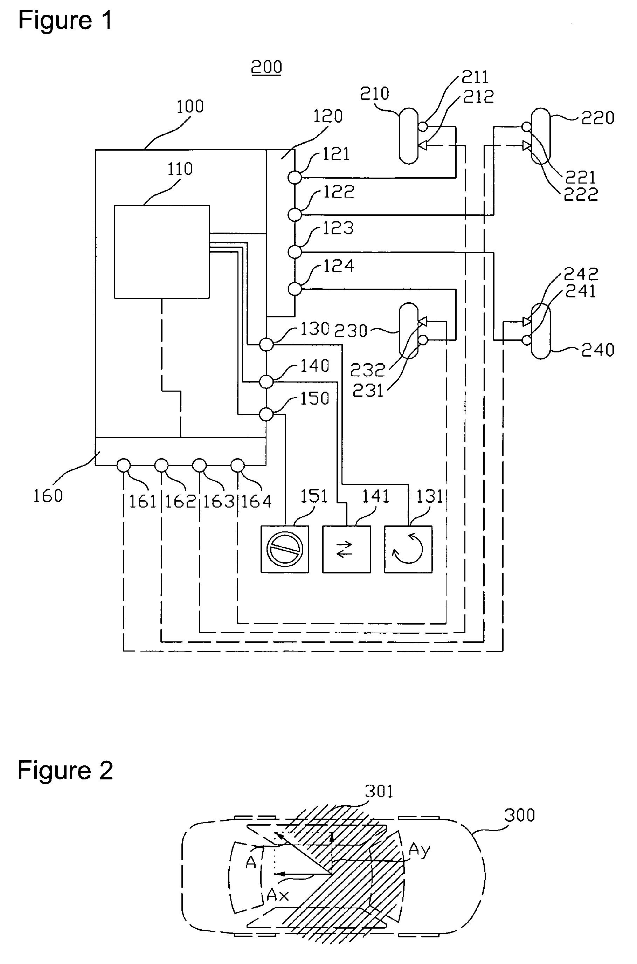

Figure 1 shows a vehicle dynamic control system 200 comprising an electronic control circuit (ECC) 100 having a wheel speed sensor signal input 120 with four wheel speed sensor signal terminals 121, 122, 123, 124. The ECC 100 further comprises a yaw rate sensor input 130, a lateral acceleration sensor input 140, and a steering wheel angle sensor input 150. For outputting an individual brake control signal to each wheel brake of a vehicle equipped with the vehicle dynamic control system 200, the ECC 100 comprises a brake control signal output 160, which may have individual output terminals 161, 162, 163, 164. Instead of providing physical terminals for the sensor input signals and the brake control signal output, a bus system may be used, for example a CAN bus (Controller Area Network), a D$^2$B (Digital Domestic Bus), a MOST bus (Media Orientated System Transport), or others the like.

The wheel speed sensor signal input 120 is connected with the signal output of wheel speed sensors 211, 221, 231 and 241 whereby each of the brakeable wheels of the vehicle is equipped with a wheel speed sensor of its own. Further, the yaw rate sensor input 130 of the ECC 100 is connected to the signal output of a yaw rate sensor 131, the lateral acceleration sensor input 140 of the ECC 100 is connected to the signal output of a lateral acceleration sensor 141, and the steering wheel angle sensor input 150 of the ECC 100 is connected to the signal output of a steering wheel angle sensor 151. The brake control signal output 160 provides the individual brake control signals for controlling the brake forces applied to each of the vehicle wheels 210, 220, 230, 240.

The ECC 100 may be implemented as part of an electronic control unit, for instance as part of a central electronic control unit, but may also be implemented within various individual components, being e.g. partly located within a central electronic control unit and partly within peripheral units. At least some of the peripheral units may form part of the individual brakes, for example one peripheral unit may be located at the front left wheel brake 212, one at the right front wheel brake 222, one at the rear left wheel brake 232 and one at the right rear wheel brake 242. The wheel speed sensor signals supplied to the sensor inputs 120, 130, 140 and 150 are used by a signal processing unit 110 implemented within the ECC 100 to produce a brake control signal output comprising an individual brake control signal for each wheel brake 212, 222, 232, 242.

The ECC 100 comprises an anti-lock braking system, which is not shown in the Figures. The anti-lock braking system (ABS) modifies the brake bias applied to the individual vehicle wheels in certain driving conditions. The signal processing unit 110 is adapted to produce a brake correction control signal in situations, where the ABS is active, i.e. where the ABS modifies the actual brake forces of the individual vehicle wheels. The brake correction control signal is then combined with the original brake control signal to form a revised brake control signal applied to the individual wheel brakes of a vehicle. It is noted that the term brake signal is used in this application as a synonym compassing all individual brake signals used to control the vehicle wheels.

The generation of the brake correction control signal is based on the effective vehicle acceleration. The vehicle acceleration can either be calculated from sensor signals provided by a lateral acceleration sensor and a longitudinal acceleration sensor, but it may also be calculated from other signals available from sensors internal to the vehicle.

Common brake control systems estimate the longitudinal vehicle deceleration during a brake application based on the wheel-speed behaviour in combination with brake actuation signals. Hydraulic brake systems typically comprise a central brake pressure sensor for measuring the main brake cylinder pressure. Without further control, the brake pressure applied to the individual wheel brakes basically corresponds to main brake cylinder pressure. Electronic brake control systems however manipulate the hydraulic pressure supplied to the individual wheels by activating for instance dedicated valves and/or pumps located within the hydraulics of the brake system. By controlling time and intensity of valve and pump activation, the effect of the respective valve and pump activations on each individual wheel can be estimated with a given accuracy. The rotation speed of at least each brakable vehicle wheel is monitored by wheel-speed sensors for a detecting a wheel's tendency to lock in due time, thus enabling a control of the respective valve and/or pump activation allowing the wheel to transfer the highest possible braking force on the road surface without any locking.

The signal processing unit 110 may therefore be adapted to process the current brake pressures or brake forces estimated by the electronic brake control system together with the resulting wheel-speed values when calculating the effective vehicle acceleration during anti-lock system controlled brake application.

The longitudinal vehicle acceleration can also be estimated from a combination of measured and internally calculated values such as wheel-speed, estimated or measured brake effects, angular rate, yaw rate, lateral acceleration and steering wheel angle.

It is noted, the terms "lateral", "longitudinal", and "yaw" refer to the respective main axes of a vehicle, that is the lateral axis, the longitudinal axis and the yaw axis.

Figure 2 illustrates the acceleration vector A of a cornering vehicle 300 together with the longitudinal component Ax and the lateral component Ay. Figure 2 further shows a hatched area 301 indicating a "forbidden range" covering the range of acceleration vectors causing a side slip of the vehicle 300. If a current acceleration vector A is within the "forbidden range" 301, the cornering of the vehicle becomes unstable. To stabilize the cornering, the signal processing unit 110 generates a brake correction control signal individually modifying the brake force on each wheel brake. Since the invention is only applied when the anti-lock braking system of the vehicle is active, only deceleration values are allowed for the acceleration vector A. Accordingly, also acceleration values directed into the driving direction are covered by the "forbidden range".

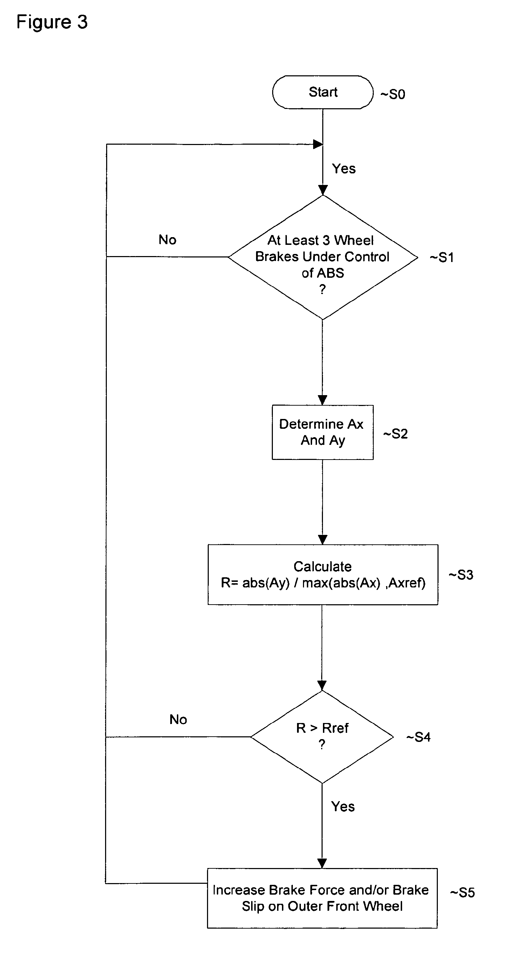

The flow chart of Figure 3 shows an example of a method executed by the signal processing unit 110 for generating a brake correction resulting in a respective control signal output at the brake control signal output 160. The illustrated method is used for vehicle dynamic control systems comprising an anti-lock braking system to stabilize the cornering movement of a vehicle.

After starting the method instep S0, the signal processing unit 110 checks in step S1, if the vehicle's anti-lock braking system modifies the braking forces of at least three vehicle wheels. If not at least three wheels are under a respective ABS control, the method returns to step S1 for resuming the check. As soon as at least three wheel brakes are under the control of the ABS the method procedes to step S2, where the signal processing unit determines the current lateral vehicle acceleration value Ay and the current longitudinal vehicle acceleration Ax according to one of the methods explained above.

After determining the lateral and longitudinal acceleration values Ax and Ay in step S2, the ratio of the lateral acceleration value to the longitudinal acceleration value is calculated in step S3. For deciding if the acceleration vector A, which is characterized by the vector sum of the lateral acceleration Ay and the longitudinal acceleration Ax, is within the legitimate range or within the illegitimate range, i.e. the so-called "forbidden range", the signal processing unit calculates the ratio of the absolute value of the lateral acceleration value to the absolute value of the longitudinal acceleration value in step S3.

To avoid a division by zero error when the longitudinal acceleration value is zero or nearly zero, a predetermined value Axref, for example 1 ms$^2$, is used as a minimum value for the longitudinal acceleration. In the event that the actual value of the previously determined longitudinal acceleration value is smaller than that minimum value Axref, the ratio R of the absolute value of the lateral acceleration value to the absolute value of the longitudinal acceleration value is then calculated based on this reference value Axref, representing the minimum quotient of the ratio. In mathematical notation, the ratio is then defined by

$$R = abs(Ay) \ / \ max \ (abs(Ax), \ Axref); \ (1)$$

with R being the ratio
abs (Ay) being the absolute value of the lateral acceleration value,
abs (Ax) being the absolute value of the longitudinal acceleration value,
Axref being the minimum reference value for the longitudinal acceleration values (positive values only), and

max (abs (Ax), Axref) equals abs (Ax) for Ax > Axref and otherwise Axref.

It is noted that due to the values being calculated only with the ABS modifying at least three wheel brake forces, the longitudinal acceleration vector is always directed opposite to the driving direction.

In a further step, not shown in Figure 3, a filter for eliminating measurement noise may be used when determining the lateral and longitudinal acceleration values, or alternatively, the time dependent ratio function R=R(t).

In the next step S4 a check is made as to whether or not the current value R of the ratio function R(t) is located within the legitimate range or within the "forbidden" range. This is achieved by comparing the respective current ratio value R with a reference value Rref. If the current ratio R is smaller than the reference value, the acceleration vector R is within the legitimate range, so that no correction of a current brake signal is necessary, and the individual vehicle wheel brake forces are not further modified. In this case, the method returns to step S1 continuing the the monitoring of the vehicles cornering stability by checking for the number of vehicles brakes controlled by the ABS. If the current value of the ratio function is however greater than the reference value, the method is continued with step S5, producing a "non-zero" brake control correction resulting in increasing the brake force and/or brake slip applied to the outer front wheel. To close the method's control cycle, the monitoring of the current vehicle acceleration is resumed in step S1. The detection of the outer side of the vehicle, i.e. the vehicle side facing away from the centre of the vehicles trajectory of curvature, the signal processing unit 110 may use the direction of the lateral vehicle acceleration.

The ratio reference value Rref is preferably set to a value within a range from 0.7 to 1.5 so that the legitimate range covers a sector ranging from about within +/- 35 degree to within +/- 55 degree with respect to the longitudinal axis of the vehicle.

With the ABS brake control being active for at least three vehicle wheels, and the lateral component of the acceleration vector A being significantly higher than its longitudinal component, the vehicle is either starting to have a high sideslip or the ABS brake control overestimated the vehicle speed due to improper situation recognition. In both cases, the brake correction control provided by the signal processing unit 110 modifies the ABS brake control by increasing the brake force and/or brake slip applied to the outer side front wheel as shown in step S5 of Figure 3.

Due to the fact that the applied mathematical functions are less susceptible to interference than are the state of the art side slip estimation algorithms, the described vehicle dynamic control system enables an optimized vehicle stability control, whereby an improved cornering ability is achieved using the road grip to full capacity with a control structure of low complexity.

List of Reference Signs

| | |
|---|---|
| 100 | electronic control circuit |
| 110 | signal processing unit |
| 120 | wheel speed sensor signal input |
| 121 | wheel speed sensor signal terminal 1 |
| 122 | wheel speed sensor signal terminal 2 |
| 123 | wheel speed sensor signal terminal 3 |
| 124 | wheel speed sensor signal terminal 4 |
| 130 | yaw rate sensor input |
| 131 | yaw rate sensor |
| 140 | lateral acceleration sensor input |
| 141 | lateral acceleration sensor |
| 150 | steering wheel angle sensor input |
| 151 | steering wheel angle |
| 160 | brake control signal output |
| 161 | individual brake control signal output 1 |
| 162 | individual brake control signal output 2 |
| 163 | individual brake control signal output 3 |
| 164 | individual brake control signal output 4 |
| 200 | vehicle dynamic control system |
| 210 | left front wheel |
| 211 | wheel speed sensor for left front wheel |
| 212 | left front wheel brake |
| 220 | right front wheel |
| 221 | wheel speed sensor for right front wheel |
| 222 | right front wheel brake |

230    left rear wheel
231    wheel speed sensor for left rear wheel
232    left rear wheel brake
240    right rear wheel
241    wheel speed sensor for right rear wheel
242    right rear wheel brake
300    vehicle
301    forbidden range

A      acceleration vector
Ax     longitudinal component of acceleration vector
Ay     lateral component of acceleration vector

S0-S9      method steps

**Claims**

1.  Electronic control circuit for a vehicle dynamic control system, the electronic control circuit (100) comprising:

    - a wheel speed sensor signal input (120) adapted to supply the electronic control circuit (100) with sensor signals provided by wheel speed sensors (211, 221, 231, 241) arranged at wheels (210, 220, 230, 240) of a vehicle (300) having brakes (212, 222, 232, 242) adapted to be controlled by the electronic control circuit (100);
    - a lateral acceleration sensor input (140) adapted to supply the electronic control circuit (100) with sensor signals provided by a lateral acceleration sensor (141);
    - a yaw rate sensor input (130) adapted to supply the electronic control circuit with sensor signals provided by a yaw rate sensor (131);
    - a steering wheel angle sensor input (150) adapted to supply the electronic control circuit with sensor signals provided by a steering wheel angle sensor (151);
    - a brake control signal output (160) adapted to individually output a brake control signal to each wheel brake (212, 222, 232, 242) of the vehicle; and
    - a signal processing unit (110) adapted to determine, if the braking force applied to wheels of the vehicle is modified by an anti-lock braking system, and to determine a lateral vehicle acceleration value and a longitudinal vehicle acceleration value based on sensor signals received on one or more of the sensor signal inputs;

    **characterized in that** the signal processing unit (110) is further adapted to generate a brake correction control signal which comprises a component representing an instruction for applying an additional brake force and/or brake slip to the outer front wheel upon

    - determining the anti-lock braking system modifying the braking force applied to at least three wheels of the vehicle is modified by the anti-lock braking system, and
    - determining a ratio of the lateral vehicle acceleration value (Ay) to the longitudinal vehicle acceleration value (Ax) being outside a predetermined range of legitimate ratio values.

2.  Electronic control circuit according to claim 1, wherein the longitudinal vehicle acceleration value (Ax) is determined based on brake pressure values or brake force values together with wheel-speed values.

3.  Electronic control circuit according to claim 1 or 2, wherein the lateral vehicle acceleration value (Ay) is determined based on a sensor signal provided by a lateral acceleration sensor (141) and the longitudinal vehicle acceleration value (Ax) is determined based on a sensor signal provided by a longitudinal acceleration sensor.

4.  Electronic control circuit according to claim 1, 2 or 3, wherein the ratio of the lateral vehicle acceleration value (Ay) to the longitudinal vehicle acceleration value (Ax) is calculated based on a minimum value (Axref) for the longitudinal vehicle acceleration upon the previously determined longitudinal acceleration value (Ax) being smaller than the minimum value (Axref).

5.  Electronic control circuit according to one of the preceding claims, wherein the predetermined range of legitimate values is defined by the interval of real numbers between the interval boundaries -n to +n, with n ranging from 0.7 to 1.5.

**6.** Vehicle dynamic control system comprising:

- an electronic control circuit (100) according to one of claims 1 to 5;
- a wheel speed sensor (211, 221, 231, 241) for each front wheel (210, 220) and for each rear wheel of at least one rear axle, whereby each wheel speed sensor is connected to the wheel speed sensor signal input (120) of the electronic control circuit (100);
- a steering wheel angle sensor (151) connected to the steering wheel angle sensor input (150) of the electronic control circuit (100);
- a lateral acceleration sensor (141)) connected to the lateral acceleration sensor input (140) of the electronic control circuit (100); and
- a yaw rate sensor (131) connected to the yaw rate sensor input (130).

**7.** Vehicle with a vehicle dynamic control system (200) according to claim 6.

**8.** Method for controlling the brakes of a vehicle, the method comprising steps for:

- (S1) detecting the modification of the brake force applied to at least three wheels (210, 220, 230, 240) of the vehicle (300) by an anti-lock braking system of the vehicle (300);
- (S2) determining the lateral vehicle acceleration value (Ay) and the longitudinal vehicle acceleration value (Ax);
- (S3) determining the absolute value of the ratio (R) of the lateral vehicle acceleration value (Ay) to the longitudinal vehicle acceleration value (Ax);
- (S4) determining, if the absolute value of the ratio (R) of the lateral vehicle acceleration value (Ay) to the longitudinal vehicle acceleration value (Ax) is greater than a predetermined real number;
- (S5) generating a brake correction control signal increasing the brake force and/or brake slip applied to the outer front wheel.

**Patentansprüche**

**1.** Elektronischer Steuerkreis für ein dynamisches Fahrzeugsteuersystem, wobei der elektronische Steuerkreis (100) Folgendes umfasst:

- einen Raddrehzahlsensor-Signaleingang (120), der dafür eingerichtet ist, dem elektronischen Steuerkreis (100) Sensorsignale zuzuführen, die von Raddrehzahlsensoren (211, 221, 231, 241) bereitgestellt werden, die an Rädern (210, 220, 230, 240) eines Fahrzeugs (300) angeordnet sind, welche Bremsen (212, 222, 232, 242) aufweisen, die dafür eingerichtet sind, vom elektronischen Steuerkreis (100) gesteuert zu werden,
- einen Querbeschleunigungssensor-Eingang (140), der dafür eingerichtet ist, dem elektronischen Steuerkreis (100) Sensorsignale zuzuführen, die von einem Querbeschleunigungssensor (141) bereitgestellt werden,
- einen Giergeschwindigkeitssensor-Eingang (130), der dafür eingerichtet ist, dem elektronischen Steuerkreis Sensorsignale zuzuführen, die von einem Giergeschwindigkeitssensor (131) bereitgestellt werden,
- einen Lenkradwinkelsensor-Eingang (150), der dafür eingerichtet ist, dem elektronischen Steuerkreis Sensorsignale zuzuführen, die von einem Lenkradwinkelsensor (151) bereitgestellt werden,
- einen Bremssteuersignal-Ausgang (160), der dafür eingerichtet ist, an jede Radbremse (212, 222, 232, 242) des Fahrzeugs einzeln ein Bremssteuersignal auszugeben, und
- eine Signalverarbeitungseinheit (110), die dafür eingerichtet ist zu bestimmen, ob die an Rädern des Fahrzeugs anliegende Bremskraft durch ein Anti-Blockier-System modifiziert ist, und basierend auf Sensorsignalen, die an einem oder mehreren der Sensorsignaleingänge empfangen werden, einen Fahrzeug-Querbeschleunigungswert und einen Fahrzeug-Längsbeschleunigungswert zu bestimmen,

**dadurch gekennzeichnet, dass** die Signalverarbeitungseinheit (110) ferner dafür eingerichtet ist, ein Bremskorrektur-Steuersignal zu erzeugen, das eine Komponente umfasst, die eine Anweisung zum Anlegen einer zusätzlichen Bremskraft und/oder eines Bremsschlupfes am äußeren Vorderrad darstellt, nach dem:

- Bestimmen, dass das Anti-Blockier-System die an mindestens drei Rädern des Fahrzeugs anliegende Bremskraft modifiziert, und
- Bestimmen, dass ein Verhältnis des Fahrzeug-Querbeschleunigungswertes (Ay) zum Fahrzeug-Längsbeschleunigungswert (Ax) außerhalb eines festgelegten Bereiches zulässiger Verhältniswerte liegt.

**2.** Elektronischer Steuerkreis nach Anspruch 1, wobei der Fahrzeug-Längsbeschleunigungswert (Ax) basierend auf Bremsdruckwerten oder Bremskraftwerten zusammen mit Raddrehzahlwerten bestimmt wird.

**3.** Elektronischer Steuerkreis nach Anspruch 1 oder 2, wobei der Fahrzeug-Querbeschleunigungswert (Ay) basierend auf einem Sensorsignal bestimmt wird, das durch einen Querbeschleunigungssensor (141) bereitgestellt wird, und der Fahrzeug-Längsbeschleunigungswert (Ax) basierend auf einem Sensorsignal bestimmt wird, das durch einen Längsbeschleunigungssensor bereitgestellt wird.

**4.** Elektronischer Steuerkreis nach Anspruch 1, 2 oder 3, wobei das Verhältnis des Fahrzeug-Querbeschleunigungswertes (Ay) zum Fahrzeug-Längsbeschleunigungswert(Ax) basierend auf einem Minimalwert (Axref) für die Fahrzeuglängsbeschleunigung berechnet wird, wenn der zuvor bestimmte Längsbeschleunigungswert (Ax) kleiner als der Minimalwert (Axref) ist.

**5.** Elektronischer Steuerkreis nach einem der vorhergehenden Ansprüche, wobei der festgelegte Bereich zulässiger Werte durch das Intervall reeller Zahlen zwischen den Intervallgrenzen -n und +n definiert ist, wobei n im Bereich von 0,7 bis 1,5 liegt.

**6.** Dynamisches Fahrzeugsteuersystem, Folgendes umfassend:

- eine elektronische Steuereinheit (100) nach einem der Ansprüche 1 bis 5,
- einen Raddrehzahlsensor (211, 221, 231, 241) für jedes Vorderrad (210, 220) und für jedes Hinterrad mindestens einer Hinterachse, wobei jeder Raddrehzahlsensor an den Raddrehzahlsensor-Signaleingang (120) des elektronischen Steuerkreises (100) angeschlossen ist,
- einen Lenkradwinkelsensor (151), der an den Lenkradwinkelsensor-Eingang (150) des elektronischen Steuerkreises (100) angeschlossen ist,
- einen Querbeschleunigungssensor (141), der an den Querbeschleunigungssensor-Eingang (140) des elektronischen Steuerkreises (100) angeschlossen ist, und
- einen Giergeschwindigkeitssensor (131), der an den Giergeschwindigkeitssensor-Eingang (130) angeschlossen ist.

**7.** Fahrzeug mit einem dynamischen Fahrzeugsteuersystem (200) nach Anspruch 6.

**8.** Verfahren zum Steuern der Bremsen eines Fahrzeugs, wobei das Verfahren folgende Schritte umfasst:

(S1) Erkennen der Modifikation der an mindestens drei Rädern (210, 220, 230, 240) des Fahrzeugs (300) anliegenden Bremskraft durch ein Anti-Blockier-System des Fahrzeugs (300),
(S2) Bestimmen des Fahrzeug-Querbeschleunigungswertes (Ay) und des Fahrzeug-Längsbeschleunigungswertes (Ax),
(S3) Bestimmen des absoluten Wertes des Verhältnisses (R) des Fahrzeug-Querbeschleunigungswertes (Ay) zum Fahrzeug-Längsbeschleunigungswert (Ax),
(S4) Bestimmen, ob der absolute Wert des Verhältnisses (R) des Fahrzeug-Querbeschleunigungswertes (Ay) zum Fahrzeug-Längsbeschleunigungswert (Ax) größer als eine festgelegte reelle Zahl ist,
(S5) Erzeugen eines Bremskorrektur-Steuersignals, das die Bremskraft und/oder den Bremsschlupf verstärkt, die/der am äußeren Vorderrad anliegt.

**Revendications**

**1.** Circuit de commande électronique pour système de contrôle de la dynamique d'un véhicule, le circuit (100) de commande électronique comprenant :

une entrée (120) de signal d'un capteur de vitesse de roue adapté pour délivrer au circuit (100) de commande électronique des signaux de capteur délivrés par des capteurs (211, 221, 231, 241) de vitesse de roue agencés sur les roues (210, 220, 230, 240) d'un véhicule (300) présentant des freins (212, 222, 232, 242) adaptés pour être commandés par le circuit (100) de commande électronique,
une entrée (140) de capteur d'accélération latérale adaptée pour délivrer au circuit (100) de commande électronique des signaux de capteur délivrés par un capteur (141) d'accélération latérale,
une entrée (130) de capteur de vitesse de lacet adaptée pour délivrer au circuit de commande électronique des signaux de capteur délivrés par un capteur (131) de vitesse de lacet,

une entrée (150) de capteur d'angle de volant adaptée pour délivrer au circuit de commande électronique des signaux de capteur délivrés par un capteur (151) d'angle de volant,

une entrée (160) de signal de commande de frein adaptée pour délivrer séparément un signal de commande de frein à chaque frein de roue (212; 222, 232, 242) du véhicule et

une unité (110) de traitement des signaux adaptée pour déterminer si la force de freinage appliquée sur les roues du véhicule est modifiée par un système d'anti-patinage et pour déterminer une valeur de l'accélération latérale du véhicule et une valeur de l'accélération longitudinale du véhicule sur la base des signaux de capteur reçus sur une ou plusieurs des entrées de signaux de capteur,

**caractérisé en ce que**

l'unité (110) de traitement de signaux est en outre adaptée pour former un signal de commande de correction de freinage qui comprend une composant qui représente une instruction appliquant une force supplémentaire de freinage et/ou un glissement de freinage sur la roue avant extérieure lorsqu'il est déterminé que le système d'anti-patinage modifie la force de freinage appliquée sur au moins trois roues du véhicule est modifiée par le système anti-patinage et

déterminer le rapport entre la valeur (Ay) de l'accélération latérale du véhicule et la valeur (Ax) de l'accélération longitudinale du véhicule se trouve à l'extérieur d'une plage prédéterminée de valeurs légitimes du rapport.

2. Circuit de commande électronique selon la revendication 1, dans lequel la valeur (Ax) de l'accélération longitudinale du véhicule est déterminée sur la base des valeurs de pression de freinage ou des valeurs de force de freinage en même temps que les valeurs de vitesse des roues.

3. Circuit de commande électronique selon les revendications 1 ou 2, dans lequel la valeur (Ay) de l'accélération latérale du véhicule est déterminée sur la base d'un signal de capteur délivré par un capteur (141) d'accélération latérale et la valeur (Ax) de l'accélération longitudinale du véhicule est déterminée sur la base d'un signal de capteur délivré par un capteur d'accélération longitudinale.

4. Circuit de commande électronique selon les revendications 1, 2 ou 3, dans lequel le rapport entre la valeur (Ay) de l'accélération latérale du véhicule et la valeur (Ax) de l'accélération longitudinale du véhicule est calculé sur la base d'une valeur minimale (Axref) de l'accélération longitudinale du véhicule lorsque la valeur (Ax) d'accélération longitudinale déterminée précédemment est inférieure à la valeur minimale (Axref).

5. Circuit de commande électronique selon l'une des revendications précédentes, dans lequel la plage prédéterminée de valeurs légitimes est définie par l'intervalle des nombres réels situé entre les frontières -n à +n de l'intervalle, n étant compris entre 0,7 et 1,5.

6. Système de contrôle de la dynamique d'un véhicule comprenant :

un circuit (100) de commande électronique selon l'une des revendications 1 à 5,
un capteur (211, 221, 231, 241) de vitesse de roue pour chaque roue avant (210, 220) et pour chaque roue arrière d'au moins un essieu arrière, chaque capteur de vitesse de roue étant raccordé à l'entrée (120) de signal de capteur de vitesse de roue du circuit (100) de commande électronique,
un capteur (151) d'angle de volant raccordé à l'entrée (150) de capteur d'angle de volant du circuit (100) de commande électronique,
un capteur (141) d'accélération latérale raccordé à l'entrée (140) de capteur d'accélération latérale du circuit (100) de commande électronique et
un capteur (131) de vitesse de lacet raccordé à l'entrée (130) de capteur de vitesse de lacet.

7. Véhicule doté d'un système (200) de commande de la dynamique d'un véhicule selon la revendication 6.

8. Procédé de commande des freins d'un véhicule, le procédé comportant les étapes qui consistent à :

(S1) détecter une modification de la force de freinage appliquée sur au moins trois roues (210, 220, 230, 240) du véhicule (300) par un système anti-patinage du véhicule (300),
(S2) déterminer la valeur (Ay) de l'accélération latérale du véhicule et la valeur (Ax) de l'accélération longitudinale du véhicule,
(S3) déterminer la valeur absolue du rapport (R) entre la valeur (Ay) de l'accélération latérale du véhicule et la valeur (Ax) de l'accélération longitudinale du véhicule,

(S4) déterminer si la valeur absolue du rapport (R) entre la valeur (Ay) de l'accélération latérale du véhicule et la valeur (Ax) de l'accélération longitudinale du véhicule est plus grande qu'un nombre réel prédéterminé,

(S5) former un signal de commande de correction de freinage qui augmente la force de freinage et/ou le glissement de freinage appliqué sur la roue avant extérieure.

# Figure 1

# Figure 2

Figure 3

```
                                    ┌──────────┐
                                    │  Start   │ ~S0
                                    └────┬─────┘
                                         │
                                         │
                                       Yes
                                         │
                                         ▼
                                    ╱─────────╲
     No                            ╱ At Least 3 Wheel╲
   ◄────────────────────────────── ╲ Brakes Under Control ╲  ~S1
                              │     ╲    of ABS    ╱
                              │      ╲    ?     ╱
                              │        ╲─────╱
                              │            │
                              │            ▼
                              │     ┌──────────────┐
                              │     │ Determine Ax │  ~S2
                              │     │   And Ay     │
                              │     └──────┬───────┘
                              │            │
                              │            ▼
                              │  ┌────────────────────────────┐
                              │  │        Calculate           │ ~S3
                              │  │ R= abs(Ay) / max(abs(Ax) ,Axref)│
                              │  └────────────┬───────────────┘
                              │               │
                              │               ▼
       No                     │          ╱─────────╲
   ◄──────────────────────────│          ╲ R > Rref ╲  ~S4
                              │           ╲    ?    ╱
                              │            ╲─────╱
                              │               │
                              │             Yes
                              │               │
                              │               ▼
                              │  ┌────────────────────────────┐
                              └──│ Increase Brake Force and/or Brake│ ~S5
                                 │   Slip on Outer Front Wheel │
                                 └────────────────────────────┘
```

At Least 3 Wheel Brakes Under Control of ABS ? ~S1

Determine Ax And Ay ~S2

Calculate R= abs(Ay) / max(abs(Ax) ,Axref) ~S3

R > Rref ? ~S4

Increase Brake Force and/or Brake Slip on Outer Front Wheel ~S5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0770528 A2